# FASCICULE DE BREVET EUROPEEN

(11) **EP 0 596 810 B1**
(45) Date de publication et mention de la délivrance du brevet: **12.03.1997**
(21) Numéro de dépôt: 93402724.4
(22) Date de dépôt: 05.11.1993
(51) Int. Cl.: F16F 1/04

(54) **Ressort hélicoidal son procédé de fabrication et fil utilisé pour sa fabrication**
Schraubenfeder, deren Herstellungsverfahren und Draht benutzt für ihre Herstellung
A helical spring, the process by which it is manufactured and the wire used for its manufacture

(30) Priorité: 05.11.1992 FR 9213306
(43) Date de publication de la demande: 11.05.1994
(73) Titulaire: Allevard, F-92210 Saint-Cloud (FR)
(72) Inventeur: Duchemin, Michel L., F-59400 Cambrai (FR)
(74) Mandataire: Hasenrader, Hubert

(56) Documents cités:
- PATENT ABSTRACTS OF JAPAN vol. 9, no. 209 (M-407)(1932) 27 Aoüt 1985 & JP-A-60 069 337 (MURATA HATSUJIYOU KK) 20 Avril 1985
- PATENT ABSTRACTS OF JAPAN vol. 10, no. 114 (M-473)(2171) 26 Avril 1986 & JP-A-60 241 535 (SANKOU SENZAI KOGYO KK) 30 Novembre 1985
- DRAHT vol. 42, no. 7/8 , 7 Aoüt 1991 , BAMBERG DE pages 495 - 503 P.NIEPAGE, P.GRINDEL 'Ventilfedern mit Drahtquerschnitten, die von der Kreisform abweichen'
- PATENT ABSTRACTS OF JAPAN vol. 10, no. 291 (M-522)(2347) 3 Octobre 1986 & JP-A-61 105 317 (CHUO SPRING CO LTD) 23 Mai 1986

## Description

La présente invention concerne un ressort hélicoïdal de compression et d'extension, son procédé de fabrication ainsi que le fil métallique utilisé pour fabriquer un tel ressort.

Les ressorts hélicoïdaux sont utilisés pour emmagasiner de l'énergie mécanique dans de nombreux appareils.

La quantité d'énergie emmagasinée est proportionnelle à la force du ressort et à sa déformation élastique. La force comme la déformation élastique du ressort sont limitées par la contrainte maximale admissible de la matière du ressort. Les éléments de matière insuffisamment sollicités raidissent le ressort et diminuent donc sa déformation élastique.

D'une manière générale, la force exercée selon l'axe longitudinal d'enroulement d'un ressort hélicoïdal sollicite tous les tronçons du fil ou de la barre qui le constitue, comme si c'était une barre de torsion. Mais alors que toutes les fibres longitudinales superficielles d'une barre de torsion de section ronde ont la même contrainte, le fil, même rond a, d'une fibre superficielle à l'autre, une contrainte qui varie d'autant plus que sa courbure est plus accentuée. La contrainte moyenne se situant au voisinage de l'interface des spires c'est-à-dire des faces en regard de deux spires adjacentes. Les fibres de la surface interne du ressort, c'est-à-dire de la partie de la surface qui est dirigée vers l'axe d'enroulement, ont les contraintes les plus fortes et qui sont d'autant plus élevées qu'elles sont plus proches de l'axe d'enroulement. La contrainte la plus forte, celle de la fibre la plus proche de l'axe d'enroulement limite la force du ressort. Les autres fibres, avec une contrainte plus faible le raidissent. Une uniformisation des contraintes est donc recherchée.

Il faut remarquer que la loi d'équilibre des forces qui s'impose à chaque section du fil décale la fibre neutre en direction de l'axe d'enroulement et fait apparaître sur la surface externe du ressort des contraintes d'autant plus faibles que les contraintes de la face interne sont plus élevées, ce qui contribue à raidir le ressort et à diminuer sa déformation élastique.

Le brevet américain US 2 998 242 a pour but de remédier dans une certaine mesure à cet inconvénient. La section du fil n'y est plus ronde ; le demi cercle le plus proche de l'axe d'enroulement étant remplacé par une demi ellipse accolée par son petit axe au demi cercle restant. Le fil est ainsi renforcé à la surface interne et la force du ressort peut être augmentée sans réduire proportionnellement la déformation élastique. L'énergie emmagasinée est accrue et à énergie emmagasinée égale, on peut réduire l'encombrement et le poids du ressort.

Un résultat analogue et une diminution de la longueur du ressort peuvent être obtenus avec la section elliptique proposée par les brevets japonais 6217436 et 6334335. Avec des proportions appropriées, on peut égaliser les contraintes de la fibre la plus proche de l'axe d'enroulement et de l'interface des spires ; mais des contraintes plus fortes se manifestent sur les fibres superficielles intermédiaires.

Les brevets japonais 59205034, 6069337, 61167727, 61167728, 1224541 et le brevet européen 0143515 cherche à remédier à cet inconvénient avec des profils ovoïdes ou ovales plus complexes, sans parvenir à l'uniformisation des contraintes superficielles. Le calcul conduit à une fonction implicite trop complexe pour être pratiquement applicable.

La présente invention a pour but de résoudre les problèmes techniques précédents de manière satisfaisante au moyen d'un fil de profil plus simple qui donne par enroulement un ressort hélicoïdal dont les écarts de contrainte sont sur sa surface interne inférieurs à 1 % dans presque toutes les applications.

Ce but est atteint, conformément à l'invention par un ressort de compression ou d'extension selon la revendication 1.

Quand la courbure du fil est faible, la distance des deux centres est très faible, le point d'intersection des deux arcs de cercle et l'hélice qu'il engendre sur la surface interne sont presque insensibles. Les deux centres peuvent même parfois en pratique, être confondus ; la surface interne du ressort est alors engendrée par un demi cercle.

Selon un mode de réalisation particulièrement avantageux, la surface externe du ressort est engendrée par deux arcs de cercle symétriques par rapport au même axe de symétrie que les arcs de cercle de la surface interne.

Selon une autre caractéristique, le rayon des arcs de cercle qui engendrent les surfaces interne et externe sont tous égaux et symétriques par rapport à deux axes de symétrie perpendiculaires entre eux.

De plus, les centres des arcs de cercle qui engendrent la surface externe sont différents des centres des arcs de cercle qui engendrent la surface interne. ils sont décalés d'une distance qui doit être calculée de façon à assurer l'équilibre des forces dans chaque section transversale.

La surface externe n'est donc pas directement adjacente à la surface interne ; elle en est séparée par deux surfaces intermédiaires constituant les interfaces entre spires. Ces interfaces sont engendrées : soit par le prolongement jusqu'à leur intersection des arcs de cercle qui engendrent les surfaces interne et externe, soit par les tangentes communes aux arcs de cercle ou bien encore par des arcs de raccordement formant des surfaces concaves car une surface convexe augmenterait inutilement et donc défavorablement la section.

Un autre objet de l'invention est un fil métallique préparé pour la fabrication d'un ressort hélicoïdal selon la revendication 7.

Les fils de section circulaire couramment utilisés pour la fabrication des ressorts hélicoïdaux actuels peuvent, après transformation être utilisés pour la fabrication des ressorts conformes à l'invention.

Pour les ressorts enroulés à froid, cette transformation peut être une dernière passe de tréfilage ou un laminage à froid. Pour les ressorts enroulés à chaud, elle peut être un étirage ou un laminage à froid ou à une température voisine de la température d'enroulement. Ces transformations exécutées convenablement, ne nuisent pas à la qualité du fil, ni à son état de surface. Elles peuvent même servir à les améliorer.

La fabrication des ressorts hélicoïdaux comporte une opération d'enroulement au cours de laquelle se produit une rotation du fil autour de son axe longitudinal. Cette rotation sans inconvénient pour un ressort en fil circulaire ne se remarque pas. Pour l'enroulement d'un fil non circulaire, comme celui de l'invention, on empêche la rotation du fil avec des glissières ou des galets de guidage qui rendent l'opération difficile.

Ainsi, encore un autre objet de l'invention est un procédé de fabrication d'un ressort hélicoïdal à partir d'un fil métallique selon la revendication 10.

L'invention sera mieux comprise à la lecture de la description qui va suivre, accompagnée des dessins annexés sur lesquels :
- la figure 1 est une vue en coupe longitudinale du ressort de l'invention ;
- la figure 1a est une vue de détail agrandie du ressort de la figure 1; et,
- les figures 2, 3 et 4 représentent des variantes de réalisation de la section du fil de ressort selon l'invention.,

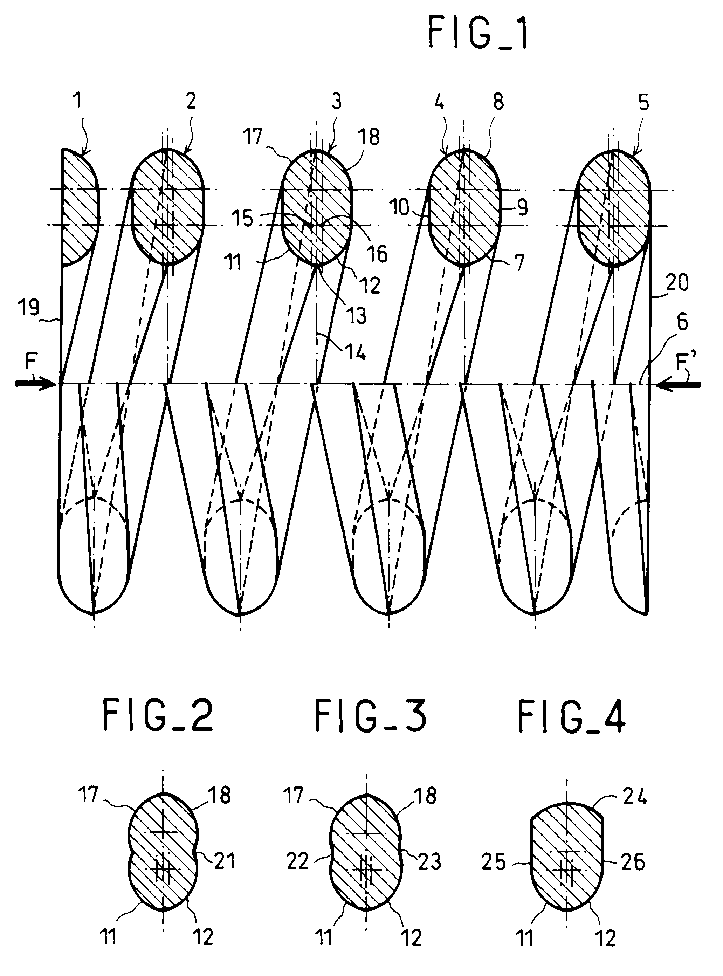

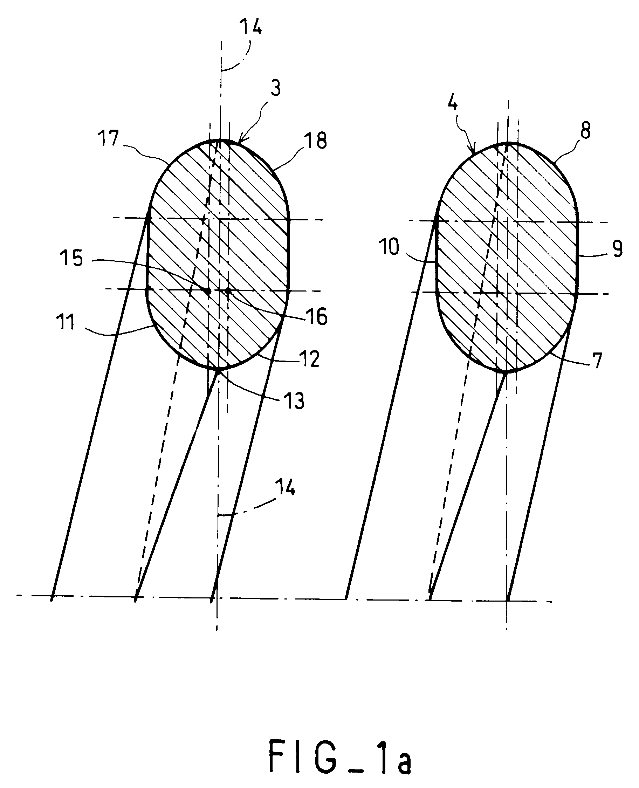

Le ressort conforme à l'invention représenté sur la figure 1 se compose de spires 1, 2, 3, 4, 5 de fil métallique enroulé en hélice autour de l'axe 6 d'enroulement.

La force F et sa réaction F' s'appliquent selon l'axe 6 et par l'intermédiaire des spires extrêmes 1,5 qui sont appelées spires mortes parce qu'elles ne participent que très peu à la déformation élastique du ressort. Ce sont les autres spires 2, 3, 4 appelées spires actives qui assurent cette déformation élastique.

La surface convexe 7 en regard de l'axe 6 et donc tournée vers l'intérieur du ressort est appelée surface interne. La surface 8 tournée vers l'extérieur est appelée surface externe. Les surfaces complémentaires 9 et 10 en regard sur deux spires adjacentes sont appelées interfaces et sont constituées des tangentes communes aux arcs 11, 17 et 12,18.

La coupe du ressort et notamment de sa surface interne au niveau d'une spire montre que cette surface est engendrée par deux arcs de cercle 11 et 12 de même rayon qui ont un point d'intersection 13 sur leur axe de symétrie 14 perpendiculaire à l'axe d'enroulement 6. L'arc 11 et le centre 15 de l'arc 12 sont d'un côté de l'axe de symétrie 14 tandis que l'arc 12 et le centre 16 de l'arc 11 sont situés de l'autre côté.

Cette disposition entraîne la présence d'une ligne de rebroussement à l'intersection 13 des arcs de cercle. On peut également prévoir dans un mode de réalisation non représenté que pour la surface interne, le centre 15 de l'arc 11 et le centre 16 de l'arc 12 soient confondus. Eventuellement, il pourra en être de même pour la surface externe 8 de telle sorte que les surface interne et externe sont constituées de demi-cercles.

La surface externe 8 est engendrée par les arcs de cercle 17 et 18 symétriques par rapport à l'axe de symétrie 14.

Les spires mortes 1,5 sont enroulées avec un pas plus petit que celui des spires actives 2,3,4. Leurs faces extrêmes 19 et 20 sont orientées dans un plan perpendiculaire à l'axe d'enroulement 6.

Le ressort peut sans inconvénient être allégé aux interfaces mais la section doit être au minimum celle qui est représentée dans la figure 2. Cette section est limitée par quatre arcs de cercle 11, 12, 17, 18 qui engendrent les surfaces interne et externe et qui sont prolongés jusqu'à leur intersection 21.

Pour éviter l'amorce de rupture à cette intersection et les surcroîts de contrainte qui risqueraient de s'y produire quand le diamètre du fil est relativement important par rapport au diamètre d'enroulement, il est préférable d'avoir recours au profil de la figure 3. Les arcs de cercle 11 et 17 d'une part et les arcs 12 et 18 d'autre part ont même rayon et sont reliés entre eux par un autre arc de cercle 22,23 qui engendre une surface concave.

On peut si nécessaire réduire le diamètre extérieur du ressort en utilisant un fil tel que celui de la figure 4. La surface interne du ressort engendrée par les arcs de cercle 11 et 12 de même rayon a encore la même forme ; mais la surface externe est engendrée par un seul arc de cercle 24 centré sur l'axe de symétrie. Les interfaces sont alors les surfaces hélicoïdales engendrées par les droites parallèles 25,26.

Quand le ressort est chargé par la force F, quel que soit le profil choisi, parmi ceux qui sont illustrés, les contraintes qui s'instaurent dans le métal sont maximales sur sa surface interne : mais elles y sont réparties de manière uniforme à 1 % près au plus, pourvu que l'indice d'enroulement c'est-à-dire le rapport de son diamètre moyen d'enroulement à la plus grande dimension de la section du fil soit au moins égal à 3 : ce qui couvre pratiquement toutes les applications des ressorts hélicoïdaux.

Les fils utilisés pour fabriquer les ressorts conformes à l'invention peuvent être obtenus par tréfilage, par étirage ou par laminage comme les fils des ressorts connus : mais ils en diffèrent par la forme de leur section.

De plus, ils sont avantageusement torsadés sur toute leur longueur selon une torsion égale et de sens inverse à la rotation qui se produit lors de l'enroulement des ressorts.

Ces fils peuvent ainsi, sans précaution spéciale être correctement enroulés. Il suffit que le départ de l'enroulement soit convenablement assuré pour que l'axe de symétrie de la section du fil prenne automatiquement pendant l'enroulement et le long du ressort, une direction perpendiculaire à l'axe d'enroulement.

Les ressorts hélicoïdaux conformes à l'invention sont réalisés par enroulement à froid ou à chaud et peuvent remplacer avantageusement tous les ressorts hélicoïdaux connus. Ils sont particulièrement intéressants dans des applications où il faut utiliser des ressorts légers et peu encombrants et notamment pour la suspension des véhicules routiers et ferroviaires.

## Revendications

1. Ressort de compression ou d'extension constitué d'un fil de section non circulaire enroulé en hélice comprenant une surface interne (7) en regard de l'axe d'enroulement (6) et une surface externe (8) tournée vers l'extérieur des spires (1 à 5), caractérisé en ce que sa surface interne (7) est engendrée par deux arcs de cercle (11,12) de même rayon symétriques entre eux par rapport à un axe de symétrie (14) perpendiculaire à l'axe d'enroulement (6) du ressort, chacun desdits arcs de cercle (11,12) et son centre (15,16) étant situés respectivement de part et d'autre dudit axe de symétrie (14).

2. Ressort selon la revendication 1, caractérisé en ce que la surface externe (8) est engendrée par deux arcs de cercle (17,18) symétriques par rapport audit axe de symétrie (14).

3. Ressort selon l'une quelconque des revendications précédentes, caractérisé en ce que ses surfaces interne et externe sont engendrées par des arcs de cercle (11,12,17,18) de même rayon.

4. Ressort selon l'une quelconque des revendications précédentes, caractérisé en ce que le contour de la section transversale du fil est constitué de quatre arcs de cercle.

5. Ressort selon l'une quelconque des revendications 1 à 3, caractérisé en ce que le contour de la section du fil comprend quatre arcs de cercle (11,12,17,18) et leurs deux tangentes communes (9,10).

6. Ressort selon la revendication 4, caractérisé en ce que le contour de la section transversale du fil comprend deux arcs de cercle (22,23) qui engendrent chacun une surface concave intercalée entre la surface interne (7) et la surface externe (8), à l'interface des spires.

7. Fil métallique préparé pour la fabrication d'un ressort hélicoïdal selon l'une quelconque des revendications précédentes, ledit fil étant de section non circulaire avec au moins un axe de symétrie, caractérisé en ce que le contour de ladite section n'est composé que d'arcs de cercle dont le centre est situé hors dudit axe de symétrie.

8. Fil métallique selon la revendication 7, caractérisé en ce qu'il est torsadé.

9. Fil métallique selon la revendication 7 ou 8, caractérisé en ce que lesdits arcs de cercle sont des quarts de cercle.

10. Procédé de fabrication d'un ressort hélicoïdal à partir d'un fil métallique selon l'une des revendications 7, 8 ou 9, caractérisé en ce que le fil est préalablement torsadé avant d'être enroulé autour d'un axe perpendiculaire à l'axe de symétrie de la section dudit fil.

## Patentansprüche

1. Druck- oder Zugfeder, bestehend aus einem wendelförmig gewickelten Draht von nicht kreisrundem Querschnitt, mit einer der Wickelachse (6) zugewandten Innenfläche (7) und einer zur Außenseite der Windungen (1 bis 5) weisenden Außenfläche (8),
dadurch gekennzeichnet, daß ihre Innenfläche (7) durch zwei Kreisbogen (11, 12) von gleichem Radius erzeugt wird, die in bezug auf eine zur Wickelachse (6) rechtwinklige Symmetrieachse (14) zueinander symmetrisch sind, wobei jeder der Kreisbogen (11, 12) und sein Mittelpunkt (15, 16) je auf einer Seite der Symmetrieachse (14) angeordnet sind.

2. Feder nach Anspruch 1,
dadurch gekennzeichnet, daß die Außenfläche (8) durch zwei Kreisbogen (17, 18) erzeugt wird, die in bezug auf die Symmetrieachse (14) symmetrisch sind.

3. Feder nach einem der vorhergehenden Ansprüche,
dadurch gekennzeichnet, daß ihre Innen- und Außenflächen durch Kreisbogen (11, 12, 17, 18) von gleichem Radius erzeugt werden.

4. Feder nach einem der vorhergehenden Ansprüche,
dadurch gekennzeichnet, daß der Umriß des Querschnitts vom Draht von vier Kreisbogen gebildet ist.

5. Feder nach einem der Ansprüche 1 bis 3,
dadurch gekennzeichnet, daß der Umriß des Querschnitts vom Draht vier Kreisbogen (11, 12, 17, 18) und ihre beiden gemeinsamen Tangenten (9, 10) umfaßt.

6. Feder nach Anspruch 4,
dadurch gekennzeichnet, daß der Umriß des Querschnitts vom Draht zwei Kreisbogen (22, 23) umfaßt, die je eine konkave Fläche erzeugen, die zwischen der Innenfläche (7) und der Außenfläche (8) an der Berührungsfläche der Windungen angeordnet ist.

7. Metallischer Draht, vorbereitet zur Herstellung einer Schraubenfeder nach einem der vorhergehenden Ansprüche, von einem nicht kreisrunden Querschnitt mit wenigstens einer Symmetrieachse,
dadurch gekennzeichnet, daß der Umriß des genannten Querschnitts nur von Kreisbogen gebildet ist, deren Mittelpunkt außerhalb der genannten Symmetrieachse angeordnet ist.

8. Metallischer Draht nach Anspruch 7,
dadurch gekennzeichnet, daß er gedrillt ist.

9. Metallischer Draht nach Anspruch 7 oder 8,
dadurch gekennzeichnet, daß die genannten Kreisbogen Viertelkreise sind.

10. Verfahren zum Herstellen einer Schraubenfeder aus einem metallischen Draht gemäß einem der Ansprüche 7, 8 oder 9,
dadurch gekennzeichnet, daß der Draht zuerst gedrillt wird, bevor er um eine zur Symmetrieachse vom genannten Querschnitt des Drahtes rechtwinklige Achse gewickelt wird.

## Claims

1. A compression or extension spring constituted by a wire of non-circular section wound into a helix comprising an inner surface (7) facing the axis of winding (6) and an outer surface (8) turned towards the outside of the turns (1 to 5), characterised in that its inner surface (7) is generated by two arcs of a circle (11, 12) of the same radius, symmetrical to each other relative to an axis of symmetry (14) perpendicular to the axis of winding (6) of the spring, each of said arcs of a circle (11, 12) and its centre (15, 16) being located respectively on either side of said axis of symmetry (14).

2. A spring according to Claim 1, characterised in that the outer surface (8) is generated by two arcs of a circle (17, 18) symmetrical with respect to said axis of symmetry (14).

3. A spring according to any one of the preceding claims, characterised in that its inner and outer surfaces are generated by two arcs of a circle (11, 12, 17, 18) of the same radius.

4. A spring according to any one of the preceding claims, characterised in that the contour of the cross section of the wire is constituted by four arcs of a circle.

5. A spring according to any one of Claims 1 to 3, characterised in that the contour of the section of the wire comprises four arcs of a circle (11, 12, 17, 18) and their two common tangents (9, 10).

6. A spring according to Claim 4, characterised in that the contour of the cross section of the wire comprises two arcs of a circle (22, 23) that each generate a concave surface interpolated between the inner surface (7) and the outer surface (8), at the interface of the turns.

7. A metal wire prepared for the manufacture of a helicoidal spring according to any one of the preceding claims, said wire being non-circular in section with at least one axis of symmetry, characterised in that the contour of said section is composed only of arcs of a circle, the centre of which is located outside said axis of symmetry.

8. A metal wire according to Claim 7, characterised in that it is twisted.

9. A metal wire according to Claim 7 or 8, characterised in that said arcs of a circle are quarter-circles.

10. A process for manufacturing a helicoidal spring using a metal wire according to one of Claims 7, 8 or 9, characterised in that the wire is previously twisted before being wound around an axis perpendicular to the axis of symmetry of the section of said wire.
